Europäisches Patentamt

European Patent Office

Office européen des brevets

(19)

(11) Numéro de publication : **0 046 094**
**B1**

(12) **FASCICULE DE BREVET EUROPÉEN**

(45) Date de publication du fascicule du brevet :
13.06.84

(51) Int. Cl.³ : **B 62 M 7/04**

(21) Numéro de dépôt : **81401120.1**

(22) Date de dépôt : **10.07.81**

(54) Groupe moto-propulseur pour véhicule motorisé à deux roues.

(30) Priorité : **04.08.80 FR 8017160**

(43) Date de publication de la demande :
**17.02.82 Bulletin 82/07**

(45) Mention de la délivrance du brevet :
**13.06.84 Bulletin 84/24**

(84) Etats contractants désignés :
**AT BE CH DE GB IT LI LU NL SE**

(56) Documents cités :
**FR-A- 1 560 646**
**FR-A- 2 284 511**
**FR-A- 2 353 432**

(73) Titulaire : **CYCLES PEUGEOT Société dite:**
**Beaulieu**
**F-25700 Valentigney (FR)**

(72) Inventeur : **Lacroix, Bernard**
**2 Rue de la Vouivre**
**25200 Montbeliard (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

La présente invention concerne les véhicules motorisés à deux roues et plus particulièrement les groupes moto-propulseurs pouvant équiper de tels véhicules.

Un véhicule motorisé à deux roues de conception classique comprend un moteur fixé sous le cadre du véhicule et une transmission constituée par un dispositif à poulies et courroie, constituant éventuellement un variateur, en série avec une transmission à chaîne constituant un étage démultiplicateur. La roue arrière peut par ailleurs être entraînée à partir d'un arbre de pédalier par l'intermédiaire d'une chaîne et de deux pignons, avec interposition d'une roue libre. Dans cet agencement il est prévu un balancier de suspension, articulé à son extrémité avant sous le cadre du véhicule ; ce balancier supporte dans sa partie médiane un arbre intermédiaire sur lequel sont montés : la poulie réceptrice, un pignon de la transmission à chaîne et le pédalier et à son extrémité arrière, il porte la roue arrière ainsi que les ressorts de suspension.

On peut noter comme inconvénients d'un tel agencement le fait qu'il ne permet d'utiliser qu'un rapport de démultiplication limité, ainsi qu'une variation possible de l'entr'axe entre le vilebrequin du moteur et l'arbre intermédiaire, lors des débattements de la roue arrière.

Dans un autre agencement (FR-A-2 353 432), la poulie réceptrice de la transmission à courroie est disposée au voisinage de l'axe de la roue arrière et entraîne cette dernière par l'intermédiaire d'un relais démultiplicateur également situé au voisinage de la roue arrière le relais démultiplicateur et l'essieu de la roue arrière étant montés sur les bras d'une fourche arrière reliée au moteur et formant avec lui un ensemble unitaire. L'entraînement par le pédalier s'effectue de façon simple par une transmission à chaîne distincte.

Avec une telle disposition, le démontage de la roue arrière est particulièrement compliqué. On retrouve par ailleurs l'inconvénient évoqué des variations d'entr'axe entre le vilebrequin et certains éléments de la transmission, qui peuvent entraîner des variations de régime du moteur et provoquer une fatigue supplémentaire de la transmission.

Enfin, on citera pour mémoire les véhicules motorisés à deux roues ne comportant pas de pédales et dans lesquels un groupe moto-propulseur classique comprenant le moteur et une boîte de vitesses assure l'entraînement de la roue arrière par l'intermédiaire d'une transmission à chaîne.

Les objectifs recherchés par cette invention sont les suivants : réaliser un groupe moto-propulseur qui, tout en étant de construction simple, permette d'obtenir un rapport de démultiplication élevé et de conserver un entr'axe fixe entre les divers éléments de la transmission lors des débattements de la roue arrière sous l'effet des inégalités du sol. Le groupe proposé doit par ailleurs être facilement adaptable sur différents types de véhicules et permette un démontage aisé aussi bien du groupe propulseur lui-même que de la roue arrière.

Par rapport au FR-A-23 53 432 qui décrit déjà un groupe moto-propulseur pour véhicule motorisé à deux roues, comprenant un moteur, un relais démultiplicateur, un pédalier, dont l'arbre est disposé entre le moteur et le relais pour entraîner l'arbre de sortie du relais, avec interposition d'un accouplement unidirectionnel, et deux bras de suspension reliés au moteur et adaptés pour recevoir, au voisinage de leurs extrémités libres, d'une part, la roue motrice du véhicule et, d'autre part, des organes de support de la partie suspendue du véhicule, l'objet de l'invention est caractérisé en ce qu'il comporte un bloc moteur-relais-démultiplicateur indépendant et éloigné de la roue arrière dans lequel un arbre d'entrée de relais, entraîné à partir du vilebrequin du moteur par une première transmission est plus éloigné de ce vilebrequin que l'arbre de sortie de ce même relais, lui-même relié à la roue arrière par une transmission séparée, l'arbre du pédalier étant disposé dans le bloc et entraînant l'arbre de sortie par l'intermédiaire d'une roue libre.

Le relais démultiplicateur et la roue arrière étant indépendants et éloignés, le relais peut aisément être réalisé de façon à fournir le rapport désiré tandis que ni les variations de position de la roue ni ses débattements n'ont d'influence sur l'entr'axe entre le vilebrequin et l'arbre du relais, qui reste ainsi constant.

L'invention va être décrite plus en détail ci-dessous en se référant au dessin annexé donné uniquement à titre d'exemple et sur lequel :

la Figure 1 est une vue en perspective du groupe moto-propulseur suivant l'invention monté sur un cadre de véhicule représenté de façon schématique ;

la Figure 2 est une vue partielle en coupe à peu près suivant la ligne 2-2 de la Fig. 1, montrant le montage de ce groupe sous le cadre du véhicule ;

la Figure 3 est une vue en coupe longitudinale du groupe, suivant la ligne 3-3 de la Fig. 4 ;

la Figure 4 est une vue en partie en plan et en partie en coupe, prise suivant la ligne 4-4 de la Fig. 3 ;

la Figure 5 est une vue en coupe suivant la ligne 5-5 de la Fig. 3 ;

la Figure 6 est une vue suivant la flèche 6 de la Fig. 3 ;

la Figure 7 est une vue à plus grande échelle du relais démultiplicateur faisant partie du groupe suivant l'invention ; et

la Figure 8 est une vue partielle en coupe montrant l'articulation de la béquille.

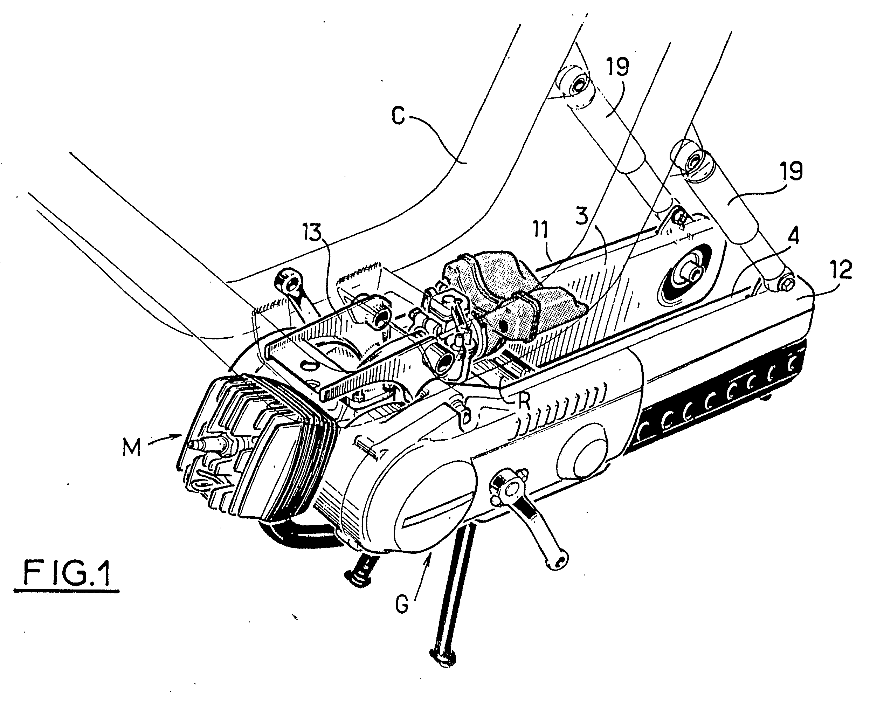

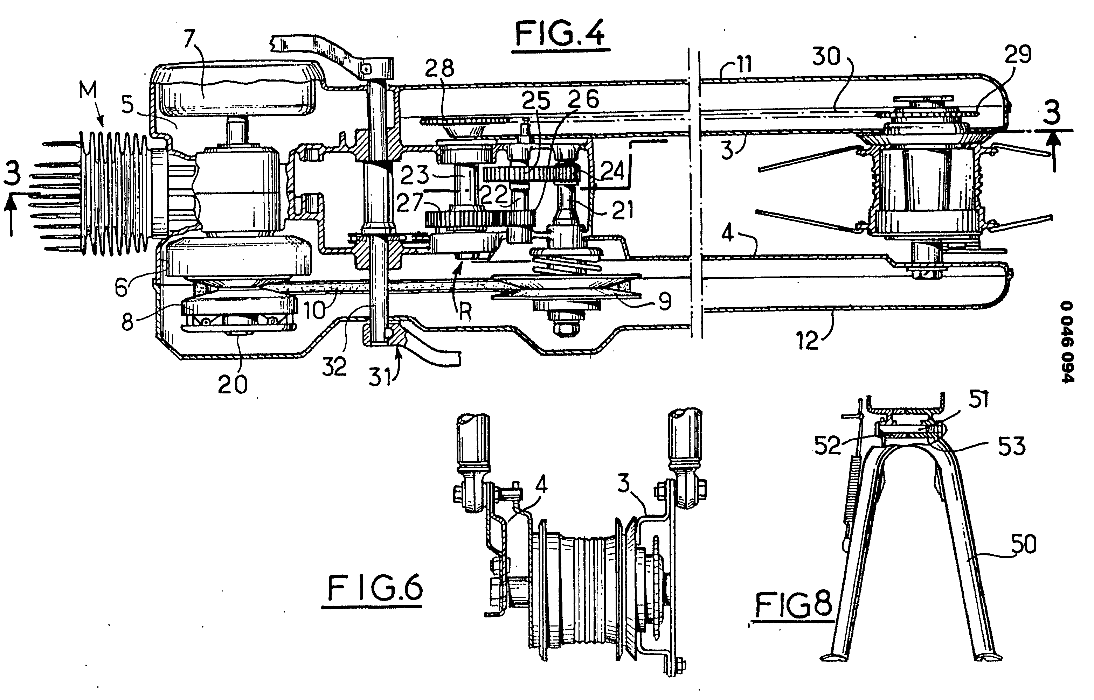

On voit sur la Fig. 1 la disposition d'ensemble d'un groupe motopropulseur G suivant l'invention, par rapport à un cadre tubulaire représenté schématiquement sur le dessin et désigné par la référence C. Ce groupe motopropulseur comprend à sa partie avant un moteur proprement dit M de conception classique et qui n'a pas à être décrit en détail. Immédiatement en arrière du moteur, est disposé un relais démultiplicateur R et l'on notera que chacun des deux demi-carters 1, 2 recevant ces deux sous-ensembles est réalisé d'une seule pièce. Sur ces demi-carters sont fixés de façon amovible deux bras longitudinaux 3, 4 s'étendant vers l'arrière et réalisés en métal, ces deux bras ayant en section par un plan vertical transversal une forme en U dont l'ouverture est dirigée vers l'extérieur (Fig. 5 et 6).

Le carter du groupe moteur-relais délimite par ailleurs de part et d'autre du moteur et sur un côté du relais R des logments 5,6 dans lesquels sont disposés, d'une part, un volant magnétique 7 et, d'autre part, la transmission à poulies 8, 9 et courroie 10. Cet ensemble constitué par le carter et les bras de suspension est complété par des couvercles latéraux 11 et 12 qui peuvent bien entendu être réalisés en une ou plusieurs parties.

Le montage du bloc motopropulseur sous le cadre du véhicule comprend un support 13 relié au cadre par deux articulations élastiques 14, 15 du type « Silent-bloc » ou analogue, d'axe transversal par rapport au plan longitudinal médian du véhicule. Le bloc lui-même est relié à ce support par deux articulations élastiques 16, 17 et une broche 18.

Les deux bras de suspension 3 et 4 comportent à leurs extrémités libres des moyens pour recevoir la roue arrière du véhicule et au voisinage de ces mêmes extrémités arrière ils sont reliés au cadre ou à la partie suspendue du véhicule par des ressorts ou des amortisseurs 19 fixés de façon amovible.

On va maintenant décrire plus en détail la chaîne cinématique entre l'arbre moteur 20 et la roue arrière. Cette chaîne comprend la transmission à poulies et courroie 8, 9, 10 qui, dans l'exemple représenté constitue un variateur de vitesse. L'arbre 21 sur lequel est montée la poulie réceptrice 9 constitue l'arbre d'entrée du relais démultiplicateur et cet arbre d'entrée 21 est reporté aussi loin que possible de l'arbre de sortie 20 du moteur, de façon à obtenir une longueur de courroie suffisamment importante. Le relais comprend par ailleurs un arbre intermédiaire 22 et un arbre de sortie 23. Une démultiplication est réalisée entre l'arbre d'entrée et l'arbre intermédiaire par une paire de pignons 24, 25 et entre ce même arbre intermédiaire et l'arbre de sortie par une deuxième paire de pignons 26, 27. L'arbre de sortie 23 entraîne la roue arrière au moyen d'une transmission classique comprenant deux roues dentées 28, 29 et une chaîne 30 à rouleaux.

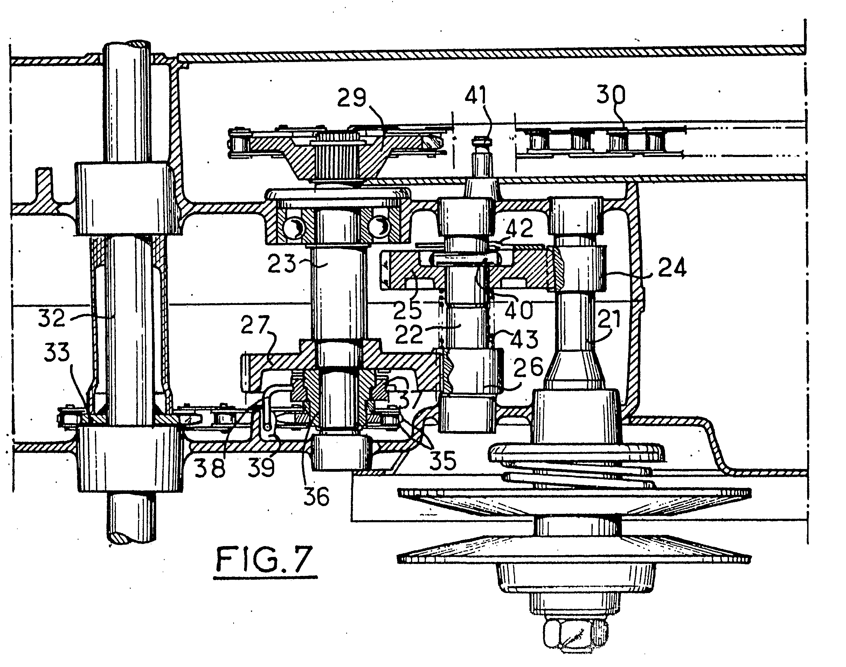

L'arbre de sortie 23 peut être entraîné à partir d'un pédalier 31 dont l'arbre 32 est tourillonné dans le carter du bloc entre le moteur et le relais et qui porte une roue dentée 33 entraînant par une chaîne 34 une autre roue dentée 35 portée par une bague 36 montée folle sur l'arbre de sortie (Fig. 7).

Un mécanisme de roue libre ou d'accouplement unidirectionnel est prévu entre la bague 36 et le pignon 27, du type comportant une bague 37 à denture frontale coopérant avec une denture complémentaire portée par la face adjacente du pignon. Cette bague comporte des rampes hélicoïdales internes guidées le long des rampes complémentaires formées sur la bague 36 et elle est légèrement freinée en rotation par une pièce de réaction 38 prenant appui sur une butée 39 du carter.

Par ailleurs, la liaison en rotation entre le pignon 25 et l'arbre intermédiaire 22 est réalisée au moyen d'une goupille 40 fixée sur l'arbre, le pignon étant monté coulissant sur ce même arbre de façon à pouvoir réaliser un débrayage sous l'action d'un poussoir 41 qui agit sur une fourchette 42. Le pignon est alors déplacé à l'encontre d'un ressort de rappel 43.

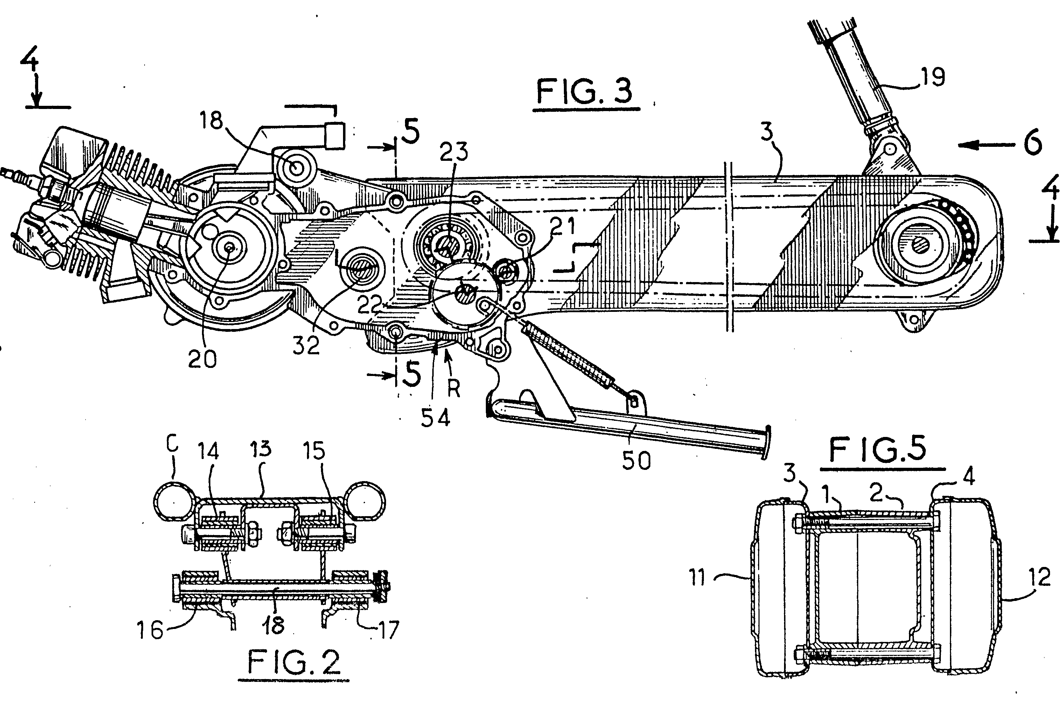

On notera sur la Fig. 3 que le plan vertical transversal passant par l'axe d'articulation du bloc motopropulseur sur le cadre (axe de la broche 18) se trouve disposé entre les deux plans parallèles passant respectivement par l'axe du vilebrequin 20 du moteur et l'axe de l'arbre de pédalier 32. Cette disposition est particulièrement favorable et a pour conséquence de rendre pratiquement imperceptibles les mouvements du pédalier.

Les Fig. 3 et 8 illustrent le mode de fixation préféré de la béquille 50. Cette dernière est articulée par une broche 51 entre deux bossages 52, 53 venus de moulage avec les deux demi-carters, au niveau du relais démultiplicateur. Le carter délimite par ailleurs une butée 54 d'appui de la béquille en position active.

Il est inutile de décrire en détail le fonctionnement d'un tel groupe motopropulseur étant donné que les fonctions résultent directement de la description qui vient d'en être faite. Par contre, les avantages de cet agencement peuvent être énumérés et sont les suivants :

Outre que le fait de disposer d'un ensemble motopropulseur incorporant les bras de suspension 3,4 permet de faciliter les opérations de fabrication et de montage étant donné que ce groupe peut être fabriqué séparément et monté d'un seul bloc sur le véhicule, ce qui simplifie aussi les opérations de démontage de l'ensemble, la présence de bras de suspension amovibles, permet au même groupe motopropulseur d'être adapté à des véhicules de types différents par simple changement des bras et en particulier par l'utilisation de bras de suspension de longueurs différentes ;

— la roue arrière étant montée à l'extrémité des bras de suspension indépendants du relais démultiplicateur, les différents axes : du moteur et des éléments de la transmission, demeurent dans des positions relatives fixes, ce qui permet d'éviter l'introduction de variations de régime du moteur qui se traduiraient par une fatigue supplémentaire de la transmission ;

— le montage et le démontage de la roue arrière est considérablement simplifié ;

— la position relative des axes d'articulation du groupe sur le cadre, du vilebrequin et du pédalier est comme on l'a indiqué précédemment éminemment favorable ;

— la position très en arrière de l'axe de la poulie réceptrice dans le relais démultiplicateur permet de conserver une longueur suffisamment importante pour la courroie, ce qui en réduit l'usure.

**Revendications**

1. Groupe motopropulseur pour véhicule motorisé à deux roues, comprenant un moteur (M), un relais démultiplicateur (R), un pédalier (31), dont l'arbre (32) est disposé entre le moteur et le relais pour entraîner l'arbre de sortie (23) du relais, avec interposition d'un accouplement unidirectionnel et deux bras de suspension (3, 4) reliés au moteur et adaptés pour recevoir, au voisinage de leurs extrémités libres, d'une part, la roue motrice du véhicule et, d'autre part, des organes de support (19) de la partie suspendue (C) du véhicule, caractérisé en ce qu'il comporte un bloc moteur-relais-démultiplicateur (1,2) indépendant et éloigné de la roue arrière, dans lequel un arbre (21) d'entrée du relais, entraîné à partir du vilebrequin (20) du moteur par une première transmission (6, 8, 9, 10) est plus éloigné de ce vilebrequin que l'arbre (23) de sortie de ce même relais, lui-même relié à la roue arrière par une transmission séparée (28, 29, 30), l'arbre du pédalier (31) étant disposé dans le bloc et entraînant l'arbre de sortie (23) par l'intermédiaire d'une roue libre (37).

2. Groupe motopropulseur suivant la revendication 1, caractérisé en ce que les bras de suspension (3,4) sont fixés de façon amovible sur le bloc moteur-relais démultiplicateur (1,2).

3. Groupe motopropulseur suivant la revendication 1, caractérisé en ce que le relais démultiplicateur comprend entre l'arbre d'entrée (21) et l'arbre de sortie (23), un arbre intermédiaire (22), un étage de démultiplication (24, 25 ; 26, 27) étant prévu, respectivement entre l'arbre d'entrée et l'arbre intermédiaire et entre l'arbre intermédiaire et l'arbre de sortie.

4. Groupe motopropulseur suivant l'une quelconque des revendications 1 à 3, caractérisé en ce que le bloc moteur-relais démultiplicateur 1,2) comporte deux bossages (52, 53) venus de matière et entre lesquels est articulée une béquille (50).

5. Groupe motopropulseur suivant la revendication 4, caractérisé en ce que le bloc-moteur-relais démultiplicateur (1, 2) délimite de plus une butée d'appui (54) pour ladite béquille (50).

6. Groupe motopropulseur suivant la revendication 1, caractérisé en ce que le bloc moteur relais démultiplicateur (1, 2) est articulé sur le cadre du véhicule autour d'un axe de la broche (18), le plan vertical transversal passant par cet axe d'articulation étant disposé entre les deux plans parallèles passant respectivement par l'axe du vilebrequin (20) du moteur et l'axe de l'arbre de pédalier (32).

**Claims**

1. Drive unit for a two-wheeled motor-driven vehicle comprising a motor (M), a gearing down relay (R), a crank gear (31), whose shaft (32) is located between the motor and the relay for driving the output shaft (23) of the relay, with interposition of a unidirectional coupling, and two suspension arms (3, 4) connected to the motor and adapted to receive, in the vicinity of the free ends thereof, on one hand the driving wheel of the vehicle and, on the other hand, support means (19) for the suspended part (C) of the vehicle, characterized in that it comprises a motor-gearing down relay assembly (1, 2) independent and located at some distance from the rear wheel, in which an input shaft (21) of the relay, driven by the crankshaft (20) of the motor through a first transmission (6, 8, 9, 10), is spaced further away from the crankshaft than the output shaft (23) of the relay, itself drivingly connected to the rear wheel by means of a distinct transmission (28, 29, 30), the shaft of the crank gear (31) being located in the assembly and driving the output shaft (23) with interposition of a free wheel (37).

2. Driving unit according to claim 1, characterized in that the suspension arms (3, 4) are detachably fixed to the motor-gearing down relay assembly.

3. Drive unit according to claim 1, characterized in that the gearing down relay comprises, between the input shaft (21) and the output shaft (23), an intermediate shaft (22), a gearing down stage (24, 25 ; 26, 27) being provided respectively between the input shaft and the intermediate shaft and between the intermediate shaft and the output shaft.

4. Drive unit according to claim 1, 2 or 3, characterized in that the motor-gearing down relay assembly (1, 2) comprises two integral bosses (52, 53) and between which bosses a stand (50) is pivotally mounted.

5. Drive unit according to Claim 4, characterized in that the motor-gearing down relay assembly (1, 2) further defines a support abutment (54) for said stand (50).

6. Drive unit according to claim 1, characterized in that the motor-gearing down relay assembly (1, 2) is pivoted on the vehicle frame about an axis (18), the vertical transverse plane containing said pivot axis being located between the two parallel planes respectively containing the axis of the crankshaft (20) of the motor and the axis of the crank gear shaft (32).

**Ansprüche**

1. Motor-Antriebseinheit für ein zweirädriges Kraftfahrzeug, mit einem Motor (M), einem Untersetzungsgetriebe (R), einer Tretkurbel (31), deren Welle (32) unter Wirkung einer in einer Richtung wirksamen Kupplung zwischen dem Motor und dem Getriebe angeordnet ist, um die Abtriebswelle (23) des Getriebes mitzunehmen, mit zwei Aufhängearmen (3, 4), die mit dem Motor verbunden sind und in der Nähe ihrer freien Enden zum einen das Antriebsrad des Fahrzeugs und zum anderen die Tragelemente (19) des Aufhängungsteils (C) des Fahrzeugs aufnehmen, dadurch gekennzeichnet, daß die Antriebseinheit ein Untersetzungsgetriebe (1, 2) in einem Block aufweist, welches unabhängig und vom Hinterrad entfernt angeordnet ist und in welchem eine Getriebe-Eingangswelle (21), die mit Hilfe eines ersten Antriebs (6, 8, 9, 10) von der Kurbelwelle (20) des Motors angetrieben wird, weiter von der Kurbelwelle entfernt angeordnet ist als die Abtriebswelle (23) des Untersetzungsgetriebes, welches seinerseits über einen getrennten Antrieb (28, 29, 30) mit dem Hinterrad verbunden ist, wobei die Welle der Tretkurbel (31) in dem Block angeordnet ist und die Abtriebswelle (23) über ein freies Rad (27) mitnimmt.

2. Motor-Antriebseinheit nach Anspruch 1, dadurch gekennzeichnet, daß die Aufhängearme (3, 4) fest mit dem Untersetzungsgetriebe (1, 2) verbunden sind.

3. Motor-Antriebseinheit nach Anspruch 1, dadurch gekennzeichnet, daß das Untersetzungsgetriebe zwischen der Eingangswelle (21) und der Abtriebswelle (23) eine Zwischenwelle (22) aufweist, wobei zwischen der Eingangswelle und der Zwischenwelle beziehungsweise der Zwischenwelle und der Abtriebswelle jeweils eine Untersetzungsstufe (24, 25 ; 26, 27) vorgesehen ist.

4. Motor-Antriebseinheit nach einem der Ansprüche 1 bis 3, dadurch gekennzeichnet, daß der Block des Untersetzungsgetriebes (1, 2) zwei einstückig verbundene Nocken (52, 53) aufweist, zwischen denen ein Ständer (50) angelenkt ist.

5. Motor-Antriebseinheit nach Anspruch 4, dadurch gekennzeichnet, daß der Block des Untersetzungsgetriebes (1, 2) ein Widerlager (54) für den Ständer (50) bildet.

6. Motor-Antriebseinheit nach Anspruch 1, dadurch gekennzeichnet, daß der Block des Untersetzungsgetriebes (1, 2) am Fahrzeugrahmen an einer Gelenkachse (18) angeordnet ist, wobei sich die durch diese Gelenkachse hindurchgehende senkrechte Querebene zwischen den beiden parallelen Ebenen erstreckt, die durch die Achse der Kurbelwelle (20) des Motors beziehungsweise die Achse der Tretkurbelwelle (32) hindurchgehen.

FIG.1

FIG. 3

FIG. 2

FIG.5

FIG.4

FIG.6

FIG.8

FIG.7